(19) Europäisches Patentamt
European Patent Office
Office européen des brevets

(11) Veröffentlichungsnummer : **0 134 019**
**B1**

(12) **EUROPÄISCHE PATENTSCHRIFT**

(45) Veröffentlichungstag der Patentschrift : **08.07.87**

(51) Int. Cl.⁴ : **C 07 B 45/04**, C 07 C147/14

(21) Anmeldenummer : **84109418.8**

(22) Anmeldetag : **08.08.84**

(54) **Verfahren zur Herstellung von selbstvernetzenden Kunstharzen und ihre Verwendung.**

(30) Priorität : **17.08.83 DE 3329693**

(43) Veröffentlichungstag der Anmeldung : **13.03.85 Patentblatt 85/11**

(45) Bekanntmachung des Hinweises auf die Patenterteilung : **08.07.87 Patentblatt 87/28**

(84) Benannte Vertragsstaaten : **AT BE CH DE FR GB IT LI NL SE**

(56) Entgegenhaltungen :
**FR-A- 2 268 051**
**US-A- 4 396 732**

(73) Patentinhaber : **BASF Lacke + Farben Aktiengesellschaft**
**Max-Winkelmann-Strasse 80**
**D-4400 Münster (DE)**

(72) Erfinder : **Loch, Werner, Dr.**
**In der Bleiche 2**
**D-6701 Erpolzheim (DE)**
Erfinder : **Schupp, Eberhard, Dr.**
**Tilsiter Weg 4**
**D-6830 Schwetzingen (DE)**
Erfinder : **Osterloh, Rolf, Dr.**
**Am Wehrhaus 16 a**
**D-6718 Gruenstadt (DE)**
Erfinder : **Dobbelstein, Arnold, Dr.**
**Emil-Nolde-Weg 95**
**D-4400 Münster (DE)**
Erfinder : **Ahlers, Klaas, Dr.**
**Foehrenweg 21**
**D-4400 Muenster (DE)**

(74) Vertreter : **Rämisch, Friedrich, Dr. et al**
**BASF Aktiengesellschaft Carl-Bosch-Strasse 38**
**D-6700 Ludwigshafen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein Verfahren zur Herstellung von in der Hitze selbstvernetzenden Kunstharzen und ihre Verwendung als Bindemittel für kathodische Elektrotauchlacke.

In der DE-B-23 20 301 werden selbstvernetzende Kunstharze und ihre Verwendung für die kathodische Elektrotauchlackierung elektrisch leitender Metalloberflächen beschrieben. Ihre Herstellung erfolgt durch Umsetzung von niedermolekularen Mannich-Basen aus mehrwertigen Phenolen mit Polyepoxidverbindungen. Neben normalen sekundären Dialkylaminen werden als Aminkomponente im wesentlichen sekundäre Hydroxyalkylamine, respektive β-Hydroxyalkylamine, bei der Mannich-Reaktion verwendet. Die Wasserdispergierbarkeit der resultierenden Harze wird in erster Linie durch die hydrophilen β-Hydroxyalkylgruppen bewirkt, denn die Basizität des Mannich-Basen-Stickstoffs ist durch intramolekulare Wasserstoffbrückenbildung drastisch herabgesetzt. Daher kann auf den Einsatz von Hydroxyalkylaminen nicht verzichtet werden. Durch ihren Einsatz ergeben sich jedoch eine Reihe von Problemen : Da ihre Basizität aufgrund des von den β-Hydroxygruppen ausgehenden Nachbargruppeneffektes sehr gering ist, verläuft die Mannich-Reaktion nur unvollständig. Größere Mengen β-Hydroxyalkylamin bleiben unumgesetzt und werden erst bei der nachfolgenden Harzaufbaureaktion durch Epoxid abgefangen. Auf diese Weise entstehen tote Kettenenden, und es bleiben äquivalente Mengen an niedermolekularen phenolischen Mannich-Basen unumgesetzt. Aufgrund der schwachen Basizität der β-Hydroxyalkylamine sind die daraus erhaltenen Mannich-Gruppierungen hydrolyseempfindlich. Die Folge ist verminderte Badstabilität.

Selbstvernetzende Mannich-Harze und ihr Einsatz als Bindemittel für kathodische Elektrotauchlacke werden auch in der DE-B-24 19 179 beschrieben. Neben niedermolekularen mehrwertigen Phenolen werden auch Präpolymere aus niedermolekularen mehrwertigen Phenolen und niedermolekularen Epoxidharzen für die Mannich-Reaktion eingesetzt. Der Aufbau des als Lackbindemittel zu verwendenden Kunstharzes mit dem erforderlichen Molekulargewichtsbereich erfolgt wiederum anschließend durch Kettenverlängerung mit Epoxidharzen. Auch hier ist zur Erlangung der Wasserdispergierbarkeit die Mitverwendung von sekundären β-Hydroxyalkylaminen bei der Mannich-Reaktion zwingend. Die resultierenden Lacke weisen somit dieselben Nachteile auf, wie diejenigen aus der DE-B-23 20 301.

Aufgabe der vorliegenden Erfindung war es, diese Nachteile zu beheben, d. h. ein Verfahren zur Herstellung von in der Hitze selbstvernetzenden Kunstharzen aufzuzeigen, die zu kathodischen Elektrotauchlacken mit erhöhter Badstabilität und verbessertem Umgriff verarbeitet werden können.

Gegenstand der vorliegenden Erfindung ist ein Verfahren zur Herstellung von in der Hitze selbstvernetzenden Kunstharzen auf Basis von Polyadditionsprodukten mit einem mittleren Molekulargewicht $\bar{M}_n$ von 750 bis 5 000, die im Mittel pro Molekül mindestens zwei phenolische OH-Gruppen enthalten und durch Säurezusatz wasserverdünnbar sind, das dadurch gekennzeichnet ist, daß mindestens ein aliphatisches oder aromatisches Epoxidharz mit im Mittel mindestens zwei Epoxidgruppen pro Molekül und einem Epoxidäquivalentgewicht von 87 bis 2 000 mit

a) 55 bis 125 mol- %, bezogen auf die im Epoxidharz vorhandenen Epoxidgruppen, einer Verbindung, die neben mindestens einer phenolischen OH-Gruppe noch eine weitere funktionelle Gruppe enthält, deren Reaktivität gegenüber Epoxidgruppen gleich oder größer ist als die einer phenolischen OH-Gruppe und die Formel (I) aufweist

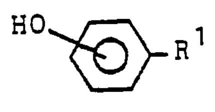 (I)

wobei die OH-Gruppe in meta- oder para-Stellung zu $R^1$ steht, $R^1$ den Rest

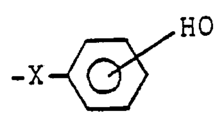 oder 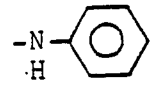

bedeutet, wobei die OH-Gruppe sich in meta- oder para-Stellung zu X befindet, X für einen geradkettigen oder verzweigten zweiwertigen aliphatischen Rest mit 1 bis 3 Kohlenstoffatomen oder für

$-SO_2-$, $-SO-$, $-CO-$, $-O-$, $-\underset{H}{N}-$, $-(CH_2)_{n_1}-\underset{H}{N}-(CH_2)_{n_1}-$, $-\underset{|}{CH}-(CH_2)_{n_2}-Y$,

$CH_3-\overset{|}{\underset{|}{C}}-(CH_2)_{n_2}-Y$

steht, wobei $n_1$ = 1, 2 oder 3, $n_2$ = 0, 1, 2 oder 3 ist und Y eine Carboxylgruppe, eine Mercaptogruppe oder eine 1 bis 4 Kohlenstoffatome enthaltende basische sekundäre Aminogruppe, eine N-alkylsubstituierte 3 bis 6 Kohlenstoffatome in der Alkylkette enthaltende Säureamidgruppe, deren Alkylkette durch eine

sekundäre basische Aminogruppe unterbrochen und ggf. noch durch eine OH-Gruppe substituiert ist, oder ein cyclisches Amidin der Formel (II)

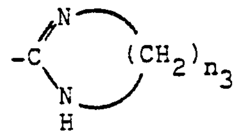

(II)

mit $n_3$ = 2 oder 3, darstellt, umsetzt, bis der Epoxidwert < 0,008 ist, und das resultierende Polyadditionsprodukt pro mol phenolischer OH-Gruppe mit

$b_1$) 0,8 bis 2,5 mol Formaldehyd oder einer Formaldehyd liefernden Verbindung und
$b_2$) 0,7 bis 2 mol einer Mischung aus

α) 25 bis 75 mol % eines sekundären Amins der Formel (III)

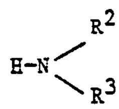

(III)

wobei $R^2$ und $R^3$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Alkoxygruppen mit 1 bis 6 Kohlenstoffatomen enthält, stehen, oder eines cyclischen sekundären Amins der Formel (IV)

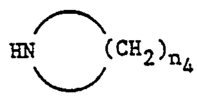

(IV)

wobei $n_4$ = 4, 5 oder 6 ist und 1 oder 2 $CH_2$-Gruppen durch ein Sauerstoff- und/oder ein Schwefelatom ersetzt sein können, oder eines Alkylethanolamins oder Alkylisopropanolamins mit 1 bis 6 Kohlenstoffatomen im Alkylrest oder eines Dialkanolamins mit 2 bis 3 Kohlenstoffatomen in den Alkanolgruppen oder eines Gemisches aus derartigen sekundären Aminen und

β) 25 bis 75 mol-% eines sekundären Amins der Formel (V)

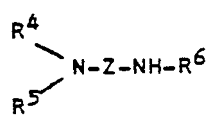

(V)

wobei $R^4$, $R^5$ und $R^6$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Hydroxygruppen oder Alkoxygruppen mit 1 bis 6 Kohlenstoffatomen enthält, stehen und Z einen geradkettigen oder verzweigten zweiwertigen aliphatischen Rest mit 2 bis 12 Kohlenstoffatomen darstellt, oder eines sekundären Amins der Formel (VI)

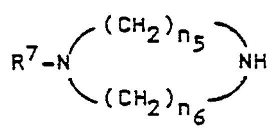

(VI)

wobei $n_5$ und $n_6$ untereinander gleich oder verschieden sind und für 1, 2 oder 3 stehen und $R^7$ einen OH-substituierten geradkettigen oder verzweigten Alkylrest mit 2 bis 6 Kohlenstoffatomen darstellt, zur Reaktion bringt und so in eine polymere Mannich-Base überführt.

Gegenstand der vorliegenden Erfindung sind auch die Verwendung der nach dem erfindungsgemäßen Verfahren hergestellten Kunstharze als Bindemittel für kathodisch abscheidbare Elektrotauchlacke sowie ein wäßriges Lackbad für die kathodische Elektrotauchlackierung, in dem das erfindungsgemäß hergestellte Harz enthalten ist.

Bei den Harzen handelt es sich um polymere Mannich-Basen, welche Elektrotauchlackbäder mit verbesserter Stabilität ergeben. Aus diesen werden nach Abscheidung auf als Kathode geschalteten elektrisch leitfähigen Substraten Filme mit verbessertem Umgriff erhalten.

Zu den im erfindungsgemäßen Verfahren zur Herstellung von in der Hitze selbstvernetzenden Kunstharzen verwendeten Einsatzstoffen ist im einzelnen folgendes auszuführen :

Geeignete aliphatische oder aromatische Epoxidharze mit im Mittel mindestens zwei Epoxidgruppen pro Molekül, welche mit der Komponente a) zur Umsetzung gebracht werden, sind solche mit einem Epoxidäquivalentgewicht von 87 bis 2 000, vorzugsweise 100 bis 1 300, insbesondere 180 bis 700.

Beispiele für geeignete Epoxidharze sind Polyglycidylether von Polyphenolen, wie beispielsweise 2,2-Bis-(4-hydroxyphenyl)-propan, 1,1-Bis-(4-hydroxyphenyl)-ethan, Bis-(4-hydroxyphenyl)-methan, Bis-(2-hydroxynaphthyl)-methan und dgl., die durch Veretherung der genannten Polyphenole mit Epichlorhydrin in Gegenwart von Alkali hergestellt werden können, Polyglycidylether von mehrwertigen Alkoholen, die durch entsprechende Umsetzung von Epichlorhydrin mit mehrwertigen Alkoholen, wie Ethylenglykol, Diethylenglykol, Triethylenglykol, 1,2-Propylenglykol, 1,3-Propandiol, 1,5-Pentandiol, 2,2-Bis-(4-hydroxycyclohexyl)-propan, Glycerin, Trimethylolpropan, Pentaerythrit und dgl., erhalten werden können, N,N'-Diglycidyl-Derivate von N-Heterocyclen und Triglycidylisocyanurat, wobei Polyglycidylether des 2,2-Bis-(4-hydroxyphenyl)-propan bevorzugt sind.

Aus Elastizitätsgründen kann es von Vorteil sein, die genannten Epoxidharze vor der Umsetzung mit der Komponente a) zumindestens anteilig mit geringeren als äquivalenten Mengen an langkettigen polyfunktionellen Alkoholen oder Mercaptanen zu modifizieren.

Während die Umsetzung der Mercaptane mit Epoxidgruppen bereits ohne Katalysator abläuft, sind für die Umsetzung der Alkohole die Verwendung eines Katalysators, wie z. B. Dimethylbenzylamin, und höhere Temperaturen (50 bis 150 °C) notwendig.

Auch eine zumindest anteilige Elastifizierung durch langkettige Dicarbonsäuren, wie beispielsweise Azelainsäure, Sebacinsäure, Dimerfettsäure, oder durch langkettige Di-sek.-Amine, wie beispielsweise die 2-(2-Hydroxyethylamino)-ethylamide oben genannter Dicarbonsäuren, welche jeweils auch in geringeren als äquivalenten Mengen eingesetzt werden können, ist möglich.

a) Bei der Komponente a), mit der die genannten Epoxidharze nach dem erfindungsgemäßen Verfahren zur Umsetzung gelangen, handelt es sich um eine Verbindung, die neben mindestens einer phenolischen OH-Gruppe noch eine weitere funktionelle Gruppe enthält, deren Reaktivität gegenüber Epoxidgruppen gleich oder größer ist als die einer phenolischen OH-Gruppe, und die Formel (I) aufweist

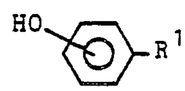

wobei die OH-Gruppe in meta- oder para-Stellung zu $R^1$ steht, $R^1$ den Rest

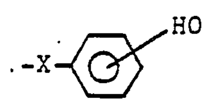

oder

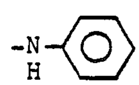

bedeutet, wobei die OH-Gruppe sich in meta- oder para-Stellung zu X befindet, X für einen geradkettigen oder verzweigten zweiwertigen aliphatischen Rest mit 1 bis 3 Kohlenstoffatomen oder für

$$-SO_2-,\ -SO-,\ -CO-,\ -O-,\ -\underset{H}{N}-,\ -(CH_2)_{n_1}-\underset{H}{N}-(CH_2)_{n_1}-,\ -\underset{|}{C}H-(CH_2)_{n_2}-Y,$$

$$CH_3-\overset{|}{\underset{|}{C}}-(CH_2)_{n_2}-Y$$

steht, wobei $n_1$ = 1, 2 oder 3, $n_2$ = 0, 1, 2 oder 3 ist und Y eine Carboxylgruppe, eine Mercaptogruppe oder eine 1 bis 4 Kohlenstoffatome enthaltende basische sekundäre Aminogruppe, eine N-alkylsubstituierte 3 bis 6 Kohlenstoffatome in der Alkylkette enthaltende Säureamidgruppe, deren Alkylkette durch eine sekundäre basische Aminogruppe unterbrochen und ggf. noch durch eine OH-Gruppe substituiert ist, oder ein cyclisches Amidin der Formel (II)

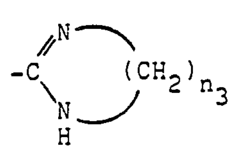

(II)

mit $n_3$ = 2 oder 3, darstellt.

Komponente a) wird in Mengen von 55 bis 125 mol-%, vorzugsweise 65 bis 100 mol-%, bezogen auf die im Epoxidharz vorhandenen Epoxidgruppen, mit den genannten Epoxidharzen im allgemeinen bei Temperaturen von 60 bis 160 °C, vorzugsweise 85 bis 130 °C, gegebenenfalls in Gegenwart von

Katalysatoren, wie Dimethylbenzylamin, Dimethylethanolamin, Thiodiglykol oder dgl. umgesetzt, bis der Epoxidwert auf < 0,008 gefallen ist.

Beispiele für als Komponente a) geeignete Verbindungen sind Bis-(4-hydroxyphenyl)-methan, 1,1-Bis-(4-hydroxyphenyl)-ethan, 2,2-Bis-(4-hydroxyphenyl)-propan, 4,4'-Dihydroxydiphenylsulfon, 4,4'-Dihydroxydiphenylsulfoxid, 4,4'-Dihydroxybenzophenon, 4,4'-Dihydroxydiphenylether, 4,4'-Dihydroxydiphenylamin, p,p'-Dihydroxydibenzylamin, 2,2-Bis-(4-hydroxyphenyl)-essigsäure, 2,2-Bis-(4-hydroxyphenyl)-ethylmercaptan, 4,4-Bis-(4-hydroxyphenyl)-valeriansäure, N-Ethyl-2,2-bis-(4-hydroxyphenyl)-ethylamin, die N-2-(2-Hydroxyethylamino)-ethylamide vorher genannter Carbonsäuren, 2-[3,3-Bis-(4-hydroxyphenyl)-n-butyl]-$\Delta^1$-imidazolin, 4-Hydroxydiphenylamin und 3-Hydroxy-diphenylamin. Die besonders bevorzugten Verbindungen sind 2,2-Bis-(4-hydroxyphenyl)-propan und die 4,4-Bis-(4-hydroxyphenyl)-valeriansäure.

$b_1$) Die Komponente $b_1$), Formaldehyd oder eine Formaldehyd liefernde Verbindung, wird in Mengen von 0,8 bis 2,5 mol, vorzugsweise 1,6 bis 2,2 mol pro mol phenolischer OH-Gruppe des nach Umsetzung des Epoxidharzes mit der Komponente a) erhaltenen Polyadditionsproduktes verwendet und kann in Form von wäßriger oder alkoholischer, wie z. B. butanolischer Formaldehydlösung eingesetzt werden, oder es kann eine Formaldehyd liefernde Verbindung, wie z. B. Paraformaldehyd, verwendet werden. Geeignet sind auch deren Gemische.

$b_2$) Die Komponente $b_2$), die zusammen mit der Komponente $b_1$) nach dem erfindungsgemäßen Verfahren für die Mannich-Reaktion eingesetzt wird, ist eine Mischung zweier sekundärer Amine unterschiedlichen Typs, $\alpha$) und $\beta$). Sie gelangt in Mengen von 0,7 bis 2 mol, vorzugsweise 1,5 bis 2 mol pro mol phenolischer OH-Gruppe des nach Umsetzung des Epoxidharzes mit der Komponente a) erhaltenen Polyadditionsproduktes zum Einsatz.

$\alpha$) Die Komponente $b_2\alpha$), die in Mengen von 25-75 mol- %, vorzugsweise 40 bis 60 mol- % in der Aminmischung $b_2$) enthalten ist, kann sein :
ein sekundäres Amin der Formel (III)

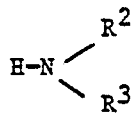
(III)

wobei $R^2$ und $R^3$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Alkoxygruppen mit 1 bis 6 Kohlenstoffatomen enthält, stehen. Beispiele sind Di-n-butylamin, Di-n-hexylamin, Di-n-propylamin, Diisopropylamin, N-Methylcyclohexylamin und Di-2-alkoxyethylamine, wie z. B. Di-2-methoxy-, Di-2-ethoxy- oder Di-2-butoxyethylamin ;
ein cyclisches sekundäres Amin der Formel (IV)

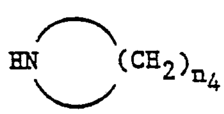
(IV)

wobei $n_4$ = 4, 5 oder 6 ist und 1 oder 2 $CH_2$-Gruppen durch ein Sauerstoff- und/oder ein Schwefelatom ersetzt sein können. Beispiele sind Pyrrolidin, Piperidin, Oxazolidin, Thiazolidin, Morpholin und Thiomorpholin ;
ein Alkylethanolamin oder Alkylisopropanolamin mit 1 bis 6 Kohlenstoffatomen im Alkylrest oder ein Dialkanolamin mit 2 bis 3 Kohlenstoffatomen in den Alkanolgruppen, wie beispielsweise N-Methylethanolamin, N-Ethylethanolamin, N-Methylisopropanolamin, Diethanolamin, Diisopropanolamin.

Es können auch Gemische aus den genannten sekundären Aminen $\alpha$) eingesetzt werden. Von den erwähnten Aminen sind die Alkanolamintypen weniger bevorzugt ; besonders bevorzugt ist Di-n-butylamin.

$\beta$) Die Komponente $b_2\beta$), die in Mengen von 25 bis 75 mol- %, vorzugsweise 40 bis 60 mol- %, in der Aminmischung $b_2$) enthalten ist, kann sein :
ein sekundäres Amin der Formel (V)

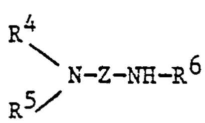
(V)

wobei $R^4$, $R^5$ und $R^6$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Hydroxylgruppen oder Alkoxygruppen mit 1 bis 6 Kohlenstoffatomen enthält, stehen und Z einen geradkettigen oder verzweigten zweiwertigen aliphatischen Rest mit 2 bis 12 Kohlenstoffatomen darstellt.

Beispiele für geeignete Verbindungen $b_2\beta$) dieser Art sind N,N,N'-Trimethylethylendiamin, N,N-Dimethyl-N'-(2-methoxyethyl)-ethylendiamin, N,N,N'-Trimethyl-propylendiamin-1.3, N,N-Diethyl-N'-methyl-propylendiamin-1.3, N,N-Dimethyl-N'-isobutyl-propylendiamin-1.3, N,N-Diethyl-N'-isobutyl-propylendiamin-1.3, N,N-Dimethyl-N'-cyclohexyl-propylendiamin-1.3, N,N-Dimethyl-N'-(2-hydroxyethyl)-propylendiamin-1.3, N,N-Dimethyl-N'-(2-methoxyethyl)-propylendiamin-1.3, N,N-Dimethyl-N'-(2-methoxypropyl)-propylendiamin-1.3, N,N-Bis-(2-hydroxyethyl)-N'-isobutyl-propylendiamin-1.3, N,N,N'-Trimethylhexamethylendiamin-1.6 oder deren Gemische ;

ein sekundäres Amin der Formel (VI)

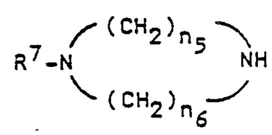

(VI)

wobei $n_5$ und $n_6$ untereinander gleich oder verschieden sind und für 1, 2 oder 3 stehen und $R^7$ einen OH-substituierten geradkettigen oder verzweigten Alkylrest mit 2 bis 6 Kohlenstoffatomen darstellt. Als Beispiel ist N-Hydroxyethylpiperazin zu nennen.

Bevorzugte Verbindungen sind N,N-Dimethyl-N'-isobutyl-propylendiamin-1.3, N,N-Dimethyl-N'-(2-methoxyethyl)-propylendiamin-1.3 und N-Hydroxyethylpiperazin.

Neben besserer Wasserdispergierbarkeit bewirken die Amine vom Typ β eine Steigerung des Umsetzungsgrades bei der Mannich-Reaktion. Verbunden damit sind effektivere Vernetzung, geringere Restamingehalte im Elektrotauchlackbad und schließlich verbesserte Umgriffe.

Die Durchführung der Mannich-Reaktion erfolgt unter üblichen aus der Literatur bekannten Bedingungen ; vgl. z. B. Houben-Weyl, Methoden der organischen Chemie, Band XI/1, S. 731, 1957. Die Reaktionstemperaturen liegen dabei im allgemeinen zwischen 70 und 90 °C, die Reaktionszeiten bei 3 bis 5 Stunden. Die polymeranaloge Umsetzung wird in, in der Lacktechnologie üblichen Lösemitteln durchgeführt ; bevorzugt sind Alkohole, wie Isopropanol, Isobutanol, Glykolether, wie beispielsweise Ethylenglykolmonoethyl- und -monobutylether und Ketone, wie Methylethylketon und Methylisobutylketon.

Die nach dem erfindungsgemäßen Verfahren hergestellten Kunstharze weisen mittlere Molekulargewichte $\overline{M}_n$ von 750 bis 5 000 auf und sind nach zumindest teilweiser Neutralisation mit einer Säure wasserverdünnbar. Sie sind daher besonders als Bindemittel für kathodisch abscheidbare Elektrotauchlacke geeignet.

Die Herstellung der Elektrotauchlacke erfolgt nach üblichen Methoden. Als Neutralisationsmittel werden organische oder anorganische Säuren, wie beispielsweise Ameisensäure, Essigsäure, Milchsäure oder Phosphorsäure, verwendet, wobei Carbonsäuren bevorzugt sind. Ihre Mengen sind so bemessen, daß Bad-pH-Werte von 6,0 bis 7,5, vorzugsweise 6,5 bis 7,0, resultieren, damit eine Korrosion der Anlagen vermieden wird. Durch Verdünnen mit entionisiertem Wasser wird im allgemeinen ein Feststoffgehalt des Elektrotauchbades von 5 bis 30, vorzugsweise 10 bis 20 Gew. % eingestellt.

Die Elektrotauchbäder können außerdem weitere übliche Zusatzstoffe, wie Pigmente, Füllstoffe, Verlaufmittel, Netzmittel, oberflächenaktive Mittel, Härtungskatalysatoren sowie zusätzliche andere Lackbindemittel und/oder Vernetzer enthalten.

Zur Verbesserung des Korrosionsschutzes ist die Mitverwendung von Schwermetallsalzen, wie beispielsweise Cu(II)acetat, -naphthenat oder -octoat, in Mengen von 0,1 bis 1,0 Gew. %, vorzugsweise 0,2 bis 0,5 Gew. %, bezogen auf das Lackbindemittel, empfehlenswert.

Die erfindungsgemäß hergestellten Lackbindemittel lassen sich für kathodisches Elektrotauchlackieren von beliebigen elektrisch-leitenden Substraten, wie beispielsweise Eisen, Aluminium, Kupfer und dgl., die gegebenenfalls chemisch vorbehandelt, z. B. phosphatiert sein können, verwenden.

Die Abscheidespannungen betragen 50 bis 400 V, vorzugsweise 150 bis 350 V. Die Abscheidung erfolgt im allgemeinen bei 15 bis 40 °C während einer Zeit von 1 bis 3 Minuten. Nach dem Abspülen der auf den elektrisch leitenden Körpern kathodisch abgeschiedenen Filme werden diese bei 150 bis 200 °C 10 bis 30 Minuten gehärtet. Es entstehen Überzüge mit hervorragenden mechanischen Eigenschaften, wie großer Härte und Kratzfestigkeit bei guter Elastizität und fester Haftung auf dem Substrat.

Weiterhin zeichnen sich die erhaltenen Überzüge durch hohe Lösemittelbeständigkeit und Beständigkeit im Salzsprühtest sowie durch guten Umgriff aus.

Die folgenden Beispiele sollen den Gegenstand der vorliegenden Erfindung näher erläutern, ohne diesen einzuschränken. Die angegebenen Teile und Prozente beziehen sich, soweit nicht anders angegeben, auf das Gewicht.

## Beispiel 1

a) Herstellung eines elastifizierten Epoxidharzes

Eine Mischung aus 705 Teilen eines handelsüblichen Diglycidylethers von 2,2-Bis-(4-hydroxyphenyl)-propan mit einem Epoxidäquivalentgewicht von 188, 171 Teilen 2,2-Bis-(4-hydroxylphenyl)-propan, 309 Teilen eines handelsüblichen Polycaprolactondiols mit einem OH-Äquivalentgewicht von 275 und 75 Teilen Xylol wird auf ca. 120 °C erwärmt. Nach Auskreisen von 2 Teilen Wasser werden bei 140 °C 1,5 Teile Dimethylbenzylamin hinzugefügt. Die Temperatur steigt auf ca. 160 °C an. Diese Temperatur wird 1 Stunde gehalten. Nach Abkühlen auf 125 °C werden weitere 2,25 Teile Dimethylbenzylamin hinzugefügt. Man rührt ca. 4 Stunden bei 130 °C und gibt nochmals 0,25 Teile Dimethylbenzylamin hinzu. Nach ca. 45 Minuten ist ein Epoxidäquivalentgewicht von 900 erreicht.

b) Herstellung des selbstvernetzenden Lackbindemittels

957 Teile des elastifizierten Epoxidharzes nach Beispiel 1a werden bei 130 °C mit 286 Teilen 4,4-Bis-(4-hydroxyphenyl)-valeriansäure und anschließend mit 0,77 Teilen Dimethylbenzylamin versetzt. Nach 45 minütigem Rühren bei 130 °C werden weitere 1,5 Teile Dimethylbenzylamin hinzugefügt. Nach 1 Stunde sind ein Epoxidwert von 0,007 und eine Säurezahl von 7,4 mg KOH/g erreicht. Das Harz wird mit 259 Teilen einer 1 : 1 : 1-Mischung aus Ethylenglykolmonoethylether, Ethylenglykolmonobutylether und Ethylenglykolmono-n-hexylether sowie 246 Teilen Methylisobutylketon verdünnt.

Festgehalt : 68,3 %
Höppler-Viskosität : (nach Weiterverdünnen mit Ethylenglykolmonobutylether auf 50 %, gemessen bei 20 °C) 1 400 mPa · s

Eine Mischung aus 347 Teilen dieser Harzlösung, 19,5 Teilen Di-n-butylamin, 24 Teilen N,N-Dimethyl-N'-(2-methoxyethyl)-propylendiamin-1.3 und 9,9 Teilen Paraformaldehyd wird unter Stickstoff zunächst 15 Minuten bei 50 °C und anschließend 1 Stunde bei 80 °C gerührt. Das resultierende selbstvernetzende Lackbindemittel weist einen Feststoffgehalt von 75 % auf.

c) Herstellung eines kathodischen Elektrotauchlacks

Aus 133 Teilen des Lackbindemittels aus Beispiel 1b, 1,6 Teilen Essigsäure, 0,25 Teilen Cu(II)acetat und Wasser werden 1 000 Teile einer 10 %igen wäßrigen Dispersion hergestellt. Hierzu werden unter Rühren 66 Teile einer Pigmentpaste zugesetzt, die wie im folgenden beschrieben, hergestellt wird.

Pigmentpaste :

Zunächst wird ein Pastenbindemittel wie folgt hergestellt : 485 Teile eines handelsüblichen Polyglycidylethers von 2,2-Bis-(4-hydroxyphenyl)-propan (Epoxidäquivalentgewicht 485) und 143 Teile 4,4-Bis-(4-hydroxyphenyl)-valeriansäure werden in 269 Teilen einer 1 : 1-Mischung aus Ethylenglykolmonoethylether und Ethylenglykolmonobutylether gelöst und auf 100 °C erhitzt. Nach Zugabe von 1,6 Teilen Thiodiglykol wird 2,5 Stunden bei 100 °C gerührt. Dann werden weitere 1,6 Teile Thiodiglykol hinzugefügt und die Mischung erneut 2 Stunden bei 100 °C gerührt. Das erhaltene Produkt weist ein Epoxidäquivalentgewicht von 1 136 und eine Säurezahl von 0 auf.

620 Teile dieses Harzes werden bei 85 °C 2 Stunden mit 147 Teilen einer 92 %igen Lösung von Dimethyl-2-ethylhexylamin-lactat in Wasser umgesetzt.

Der Epoxidwert liegt dann bei 0.

Feststoffgehalt : 73,6 %

300 Teile dieses quartäroniumgruppenhaltigen Harzes werden mit 23 Teilen N,N-Dimethyl-N'-(2-methoxyethyl)-ethylendiamin und 4,4 Teilen Paraformaldehyd 15 Minuten bei 50 °C und anschließend 1 Stunde bei 80 °C erfindungsgemäß in eine polymere Mannich-Base überführt. Das so erhaltene Pastenbindemittel weist einen Feststoffgehalt von 74 % auf.

In einer Rührwerksmühle werden 104 Teile Pastenbindemittel, 3,4 Teile Essigsäure, 4,5 Teile Ethylenglykolmonoethylether, 4,5 Teile Ethylenglykolmonobutylether, 4,5 Teile Ethylenglykolmono-n-hexylether, 143 Teile Rutil, 35 Teile Kaolin, 8,5 Teile basisches Bleisilikat, 2,3 Teile Ruß, 1,2 Teile Eisenoxidgelb, 51 Teile Wasser und 400 Teile Glasperlen mit einem Durchmesser von 2 mm 45 Minuten bei einer Drehzahl von 1 000 Umdrehungen/Minute gerührt. Nach dem Abtrennen der Glasperlen und Verdünnen mit 137 Teilen Wasser wird eine Graupaste mit einem Festgehalt von 53,6 % erhalten.

Der Elektrotauchlack weist einen pH-Wert von 6,5 auf. Er wird 24 Stunden bei 30 °C gerührt und anschließend bei einer Abscheidespannung von 150 V jeweils 2 Minuten auf zinkphosphatierten als Kathode geschalteten Stahlblechen abgeschieden. Die mit Wasser gespülten und mit Luft trocken geblasenen Naßfilme werden 20 Minuten bei 180 °C eingebrannt.

Eigenschaften :

Schichtdicke : 18 µm

Erichsentiefung : 8,5 mm

Beständigkeit gegen Methylisobutylketon (nach 50 maligem Hin- und Herreiben mit einem mit Methylisobutylketon getränkten Wattebausch) kein Angriff

480 Stunden Salzsprühtest nach ASTM (Unterwanderung am Ritz) 0,5-1 mm

Umgriff nach Ford : 15 cm

Beispiel 2

a) Herstellung des selbstvernetzenden Lackbindemittels

957 Teile des elastifizierten Epoxidharzes nach Beispiel 1a werden bei 125 °C mit 228 Teilen 2,2-Bis-(4-hydroxyphenyl)-propan und anschließend mit 1,5 Teilen Dimethylbenzylamin versetzt. Nach 1 stündigem Rühren bei 130 °C ist der Epoxidwert auf 0,005 gefallen. Das Harz wird mit 244 Teilen einer 1 : 1 : 1-Mischung aus Ethylenglykolmonoethylether, Ethylenglykolmonobutylether und Ethylenglykolmono-n-hexylether sowie 235 Teilen Methylisobutylketon verdünnt.

Festgehalt : 67,6 %

Höppler-Viskosität (nach Weiterverdünnen mit Ethylenglykolmonobutylether auf 50 %, gemessen bei 20 °C) 2 400 mPa · s

Eine Mischung aus 679 Teilen dieser Harzlösung, 52 Teilen Di-n-butylamin, 63 Teilen N,N-Dimethyl-N'-isobutyl-propylendiamin-1.3 und 26 Teilen Paraformaldehyd wird unter Stickstoff zunächst 15 Minuten bei 50 °C und anschließend 4 Stunden bei 80 °C gerührt. Das erhaltene Lackbindemittel weist einen Festkörpergehalt von 77 % auf.

b) Herstellung eines kathodischen Elektrotauchlacks

Aus 130 Teilen des Lackbindemittels nach Beispiel 2a, 6 Teilen Essigsäure, 0,25 Teilen Cu(II)acetat und Wasser werden 1 000 Teile einer 10 %igen wäßrigen Dispersion hergestellt. Hierzu werden unter Rühren 66 Teile einer Pigmentpaste zugesetzt, die, wie im folgenden beschrieben, hergestellt wird :

Pigmentpaste :

Nach Beispiel 1a) der DE-A-31 21 765 wird ein Pastenbindemittel hergestellt. Dazu werden in einem Reaktionsgefäß 200 Teile Ethylenglykolmonobutylether auf 90 °C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Anschließend wird 1 Stunde bei 90 °C nachpolymerisiert. Das resultierende Lösungspolymerisat hat einen K-Wert nach Fikentscher von 24. Der Festkörpergehalt der Copolymerisatlösung beträgt 76 %.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1 084 Teile Kaolin, 217 Teile basisches Bleisilikat, 145 Teile Ruß, 36 Teile Rutil und 3 000 Teile Glasperlen von einem Durchmesser von 2 mm 45 Minuten bei einer Drehzahl von 1 000 Umdrehungen/Minute gerührt. Nach dem Abtrennen der Glasperlen wird eine Schwarzpaste mit einem Festgehalt von 50,6 % erhalten.

Der Elektrotauchlack weist einen pH-Wert von 6,0 auf. Er wird 24 Stunden bei 30 °C gerührt und anschließend bei einer Abscheidespannung von 250 V jeweils 2 Minuten auf zinkphosphatierten als Kathode geschalteten Stahlblechen abgeschieden. Die mit Wasser gespülten und mit Luft trocken geblasenen Naßfilme werden 20 Minuten bei 180 °C eingebrannt.

Eigenschaften :

Schichtdicke : 12 µm

Schlagtiefung : 80 in × l b

Beständigkeit gegen Methylisobutylketon (nach 50maligem Hin- und Herreiben mit einem mit Methylisobutylketon getränkten Wattebausch) kein Angriff

480 Stunden Salzsprühtest nach ASTM (Unterwanderung am Ritz) 0,5 mm

Umgriff nach Ford : 18,5 cm

Beispiel 3

a) Herstellung eines elastifizierten Epoxidharzes

Eine Mischung aus 376 Teilen eines handelsüblichen Diglycidylethers von 2,2-Bis-(4-hydroxyphenyl)-propan mit einem Epoxidäquivalentgewicht von 188, 275 Teilen eines handelsüblichen Polycaprolactondiols mit einem OH-Äquivalentgewicht von 275 und 42 Teilen Xylol wird auf ca. 120 °C erwärmt.

Nach Auskreisen von 1 Teil Wasser werden bei 125 °C 2 Teile Dimethylbenzylamin hinzugefügt und die Mischung 2 Stunden bei 130 °C gerührt. Nach erneuter Zugabe von 1 Teil Dimethylbenzylamin läßt man 4 Stunden bei 130 °C weiterreagieren. Das Epoxidäquivalentgewicht liegt dann bei 593.

b) Herstellung des selbstvernetzenden Lackbindemittels

Das elastifizierte Epoxidharz nach Beispiel 3a (695 Teile) wird erfindungsgemäß direkt zum Lackbindemittel weiterverarbeitet. Hierzu wird es bei 130 °C mit 412 Teilen eines handelsüblichen Diglycidylethers von 2,2-Bis-(4-hydroxyphenyl)-propan (Epoxidäquivalentgewicht 188) und 500 Teilen 2,2-Bis-(4-hydroxyphenyl)-propan vermengt und das Gemisch 135 Minuten bei 130 °C umgesetzt. Der Epoxidwert liegt dann bei ca. 0,005. Das Harz wird anschließend mit 342 Teilen einer 1 : 1 : 1-Mischung aus Ethylenglykolmonoethylether, Ethylenglykolmonobutylether und Ethylenglykolmono-n-hexylether sowie 326 Teilen Methylisobutylketon verdünnt.

| | |
|---|---|
| Festgehalt : | 69,7 % |
| Höppler-Viskosität : (nach Weiterverdünnen mit Ethylenglykolmonobutylether auf 50 %, gemessen bei 20 °C) | 900 mPa · s |

Eine Mischung aus 409 Teilen dieser Harzlösung, 26 Teilen Di-n-butylamin, 32 Teilen N,N-Dimethyl-N'-isobutyl-propylendiamin-1.3 und 13 Teilen Paraformaldehyd wird unter Stickstoff zunächst 15 Minuten bei 50 °C und anschließend 4 Stunden bei 80 °C gerührt. Das resultierende selbstvernetzende Lackbindemittel weist einen Feststoffgehalt von 73 % auf.

c) Herstellung eines kathodischen Elektrotauchlacks

Aus 137 Teilen des Lackbindemittels aus Beispiel 3b, 3,2 Teilen Essigsäure, 0,25 Teilen Cu(II)acetat und Wasser werden 1 000 Teile einer 10 %igen wäßrigen Dispersion hergestellt. Hierzu werden unter Rühren 66 Teile einer Pigmentpaste zugesetzt, die, wie im folgenden beschrieben, hergestellt wird.

Pigmentpaste :

Zunächst wird ein Pastenbindemittel wie folgt bereitet : Bei 85 °C werden 1 668 Teile eines handelsüblichen Polyglycidylethers von 2,2-Bis-(4-hydroxyphenyl)propan (Epoxidäquivalentgewicht 16-70) in 1 112 Teilen Ethylenglykolmonobutylether gelöst. Anschließend wird eine Mischung aus 80 Teilen Dimethylethanolamin und 112,5 Teilen einer 80 %igen wäßrigen Milchsäurelösung hinzugefügt. Nach 4 stündigem Rühren bei 85 °C liegt der Epoxidwert bei 0. das Harz wird dann mit Ethylenglykolmonobutylether auf einen Festkörpergehalt von 55 % verdünnt.

In einer Rührwerksmühle werden 417 Teile dieses Pastenbindemittels, 428 Teile Rutil, 105 Teile Kaolin, 25 Teile basisches Bleisilikat, 7 Teile Ruß, 3,5 Teile Eisenoxidgelb, 508 Teile Wasser und 4 500 Teile Glasperlen (Durchmesser 2 mm) 45 Minuten bei einer Drehzahl von 1 000 Umdrehungen/Minute gerührt. Nach dem Abtrennen der Glasperlen wird eine Graupaste mit einem Festkörpergehalt von 53 % erhalten.

Der erhaltene Elektrotauchlack weist einen pH-Wert von 6,6 auf und zeigt über mehrere Wochen eine gute Badstabilität bei 30 °C auf. Nach 7 Tagen Alterung bei 30 °C wird bei einer Abscheidespannung von 350 V jeweils 2 Minuten auf zinkphosphatierten, als Kathode geschalteten Stahlblechen abgeschieden. Die mit Wasser gespülten und mit Luft trocken geblasenen Naßfilme werden 20 Minuten bei 180 °C eingebrannt.

Eigenschaften :

| | |
|---|---|
| Schichtdicke : | 15 μm |
| Schlagtiefung : | 120 in × lb |
| Beständigkeit gegen Methylisobutylketon (nach 50maligem Hin- und Herreiben mit einem mit Methylisobutylketon getränkten Wattebausch) | kein Angriff |
| 480 Stunden Salzsprühtest nach ASTM (Unterwanderung am Ritz) | 0,3 mm |
| Umgriff nach Ford : | 23 cm |
| Korrosionslinie : (nach 240 Stunden Salzsprühnebelbelastung) | 21 cm |

**Patentansprüche**

1. Verfahren zur Herstellung von in der Hitze selbstvernetzenden Kunstharzen auf Basis von Polyadditionsprodukten mit einem mittleren Molekulargewicht $\overline{M}_n$ von 750 bis 5 000, die im Mittel pro Molekül mindestens zwei phenolische OH-Gruppen enthalten und durch Säurezusatz wasserverdünnbar sind, dadurch gekennzeichnet, daß mindestens ein aliphatisches oder aromatisches Epoxidharz mit im Mittel mindestens zwei Epoxidgruppen pro Molekül und einem Epoxidäquivalentgewicht von 87 bis 2 000

mit

a) 55 bis 125 mol-%, bezogen auf die im Epoxidharz vorhandenen Epoxidgruppen, einer Verbindung, die neben mindestens einer phenolischen OH-Gruppe noch eine weitere funktionelle Gruppe enthält, deren Reaktivität gegenüber Epoxidgruppen gleich oder größer ist als die einer phenolischen OH-Gruppe und die Formel (I) aufweist

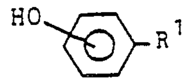

(I)

wobei die OH-Gruppe in meta- oder para-Stellung zu $R^1$ steht, $R^1$ den Rest

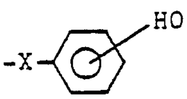

oder

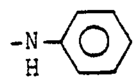

bedeutet, wobei die OH-Gruppe sich in meta- oder para-Stellung zu X befindet, X für einen geradkettigen oder verzweigten zweiwertigen aliphatischen Rest mit 1 bis 3 Kohlenstoffatomen oder für

$$-SO_2-,\ -SO-,\ -CO-,\ -O-,\ -\underset{H}{N}-,\ -(CH_2)_{n_1}-\underset{H}{N}-(CH_2)_{n_1}-,$$

$$-\underset{|}{CH}-(CH_2)_{n_2}-Y,\ CH_3-\overset{|}{\underset{|}{C}}-(CH_2)_{n_2}-Y$$

steht, wobei $n_1 = 1, 2$ oder 3, $n_2 = 0, 1, 2$ oder 3 ist und Y eine Carboxylgruppe, eine Mercaptogruppe oder eine 1 bis 4 Kohlenstoffatome enthaltende basische sekundäre Aminogruppe, eine N-alkylsubstituierte 3 bis 6 Kohlenstoffatome in der Alkylkette enthaltende Säureamidgruppe, deren Alkylkette durch eine sekundäre basische Aminogruppe unterbrochen und ggf. noch durch eine OH-Gruppe substituiert ist, oder ein cyclisches Amidin der Formel (II)

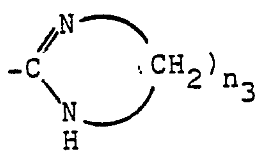

(II)

mit $n_3 = 2$ oder 3, darstellt,
umsetzt, bis der Epoxidwert $< 0{,}008$ ist, und das resultierende Polyadditionsprodukt pro mol phenolischer OH-Gruppe mit

$b_1$) 0,8 bis 2,5 mol Formaldehyd oder einer Formaldehyd liefernden Verbindung und

$b_2$) 0,7 bis 2 mol einer Mischung aus

α) 25 bis 75 mol % eines sekundären Amins der Formel (III)

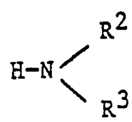

(III)

wobei $R^2$ und $R^3$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Alkoxygruppen mit 1 bis 6 Kohlenstoffatomen enthält, stehen, oder eines cyclischen sekundären Amins der Formel (IV)

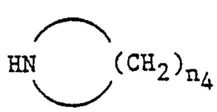

(IV)

wobei $n_4 = 4, 5$ oder 6 ist und 1 oder 2 $CH_2$-Gruppen durch ein Sauerstoff- und/oder ein Schwefelatom ersetzt sein können, oder eines Alkylethanolamins oder Alkylisopropanolamins mit 1 bis 6 Kohlenstoffatomen im Alkylrest oder eines Dialkanolamins mit 2 bis 3 Kohlenstoffatomen in den Alkanolgruppen oder eines Gemisches aus derartigen sekundären Aminen und

β) 25 bis 75 mol-% eines sekundären Amins der Formel (V)

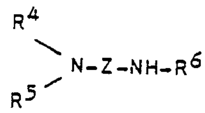

(V)

wobei $R^4$, $R^5$ und $R^6$ untereinander gleich oder verschieden sind und für einen cycloaliphatischen Rest mit 5 bis 6 Kohlenstoffatomen oder einen geradkettigen oder verzweigten aliphatischen Rest mit 1 bis 8 Kohlenstoffatomen, der gegebenenfalls bis zu 2 Hydroxygruppen oder Alkoxygruppen mit 1 bis 6 Kohlenstoffatomen enthält, stehen und Z einen geradkettigen oder verzweigten zweiwertigen aliphatischen Rest mit 2 bis 12 Kohlenstoffatomen darstellt, oder eines sekundären Amins der Formel (VI)

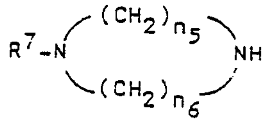

(VI)

wobei $n_5$ und $n_6$ untereinander gleich oder verschieden sind und für 1, 2 oder 3 stehen und $R^7$ einen OH-substituierten geradkettigen oder verzweigten Alkylrest mit 2 bis 6 Kohlenstoffatomen darstellt, zur Reaktion bringt und so in eine polymere Mannich-Base überführt.

2. Verfahren nach Anspruch 1, dadurch gekennzeichnet, daß als Komponente a) 4,4-Bis-(4-hydroxyphenyl)-valeriansäure in einer Menge von 100 mol-%, bezogen auf die vorhandenen Epoxidgruppen, eingesetzt wird.

3. Verfahren nach Anspruch 1, dadurch gekennzeichnet, daß als Komponente a) 2,2-Bis-(4-hydroxyphenyl)-propan eingesetzt wird.

4. Verfahren nach einem der Ansprüche 1 bis 3, dadurch gekennzeichnet, daß als Komponente $b_2\alpha$) Di-n-butylamin verwendet wird.

5. Verfahren nach einem der Ansprüche 1 bis 4, dadurch gekennzeichnet, daß als Komponente $b_2\beta$) N,N-Dimethyl-N'-isobutylpropylemin-1.3 verwendet wird.

6. Verwendung der nach einem Verfahren gemäß einem der vorhergehenden Ansprüche hergestellten Kunstharze, die durch zumindest teilweise Neutralisation mit einer Säure wasserverdünnbar gemacht wurden, als Bindemittel für kathodisch abscheidbare Elektrotauchlacke.

7. Wäßriges Lackbad für die kathodische Elektrotauchlackierung, dadurch gekennzeichnet, daß es 5 bis 30 Gew. % des nach einem Verfahren gemäß den Ansprüchen 1 bis 5 hergestellten und durch zumindest teilweise Neutralisation mit einer Säure wasserverdünnbar gemachten Kunstharzes enthält.

**Claims**

1. A process for the preparation of a synthetic resin which is self-crosslinking under the action of heat and is based on polyadducts having a mean molecular weight $\overline{M}_n$ of from 750 to 5 000, contains on average at least two phenolic OH groups per molecule and can be diluted with water when an acid is added, wherein at least one aliphatic or aromatic epoxy resin possessing on average at least two epoxide groups per molecule and having an epoxide equivalent weight of from 87 to 2 000 is reacted with

a) from 55 to 125 mol %, based on the epoxide groups present in the epoxy resin, of a compound which contains, in addition to one or more phenolic OH groups, a further functional group whose reactivity toward epoxide groups is the same as, or greater than, that of a phenolic OH group, and which is of the formula (I)

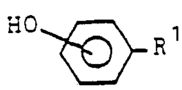

(I)

where the OH group is meta or para to $R^1$, and $R^1$ is a radical

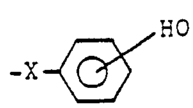

or

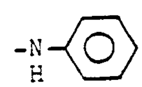

where the OH group is meta or para to X, and X is a straight-chain or branched divalent aliphatic radical of 1 to 3 carbon atoms or

$-SO_2-$, $-SO-$, $-CO-$, $-O-$, $-\underset{H}{N}-$, $-(CH_2)_{n_1}-\underset{H}{N}-(CH_2)_{n_1}-$,

$-\underset{|}{C}H-(CH_2)_{n_2}-Y$, $CH_3-\overset{|}{\underset{|}{C}}-(CH_2)_{n_2}-Y$

where $n_1$ is 1, 2 or 3, $n_2$ is 0, 1, 2 or 3 and Y is carboxyl, mercapto, a basic secondary amino group containing 1 to 4 carbon atoms, or an N-alkyl-substituted acid amide group where the alkyl chain is of 3 to 6 carbon atoms, is interrupted by a secondary basic amino group and is unsubstituted or substituted by an OH group, or is a cyclic amidine of the formula (II)

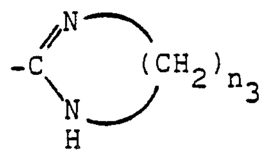

(II)

where $n_3$ is 2 or 3,
until the epoxide value is $< 0.008$, and the resulting polyadduct is reacted with, per mole of phenolic OH groups,

$b_1$) from 0.8 to 2.5 moles of formaldehyde or of a formaldehyde-donating compound, and

$b_2$) from 0.7 to 2 moles of a mixture of

$\alpha$) from 25 to 75 mole % of a secondary amine of the formula (III)

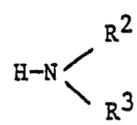

(III)

where $R^2$ and $R^3$ are identical or different and are each a cycloaliphatic radical of 5 to 6 carbon atoms or a straight-chain or branched aliphatic radical of 1 to 8 carbon atoms which may contain 1 or 2 alkoxy groups of 1 to 6 carbon atoms, or of a cyclic secondary amine of the formula (IV)

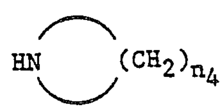

(IV)

where $n_4 = 4$, 5 or 6 and 1 or 2 CH groups can be replaced by an oxygen and/or sulfur atom, or of an alkylethanolamine or alkylisopropylamine, where alkyl is of 1 to 6 carbon atoms, or of a dialkanolamine where alkyl is of 2 or 3 carbon atoms, or of a mixture of such secondary amines with

$\beta$) from 25 to 75 mol % of a secondary amine of the formula (V)

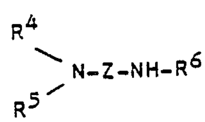

(V)

where $R^4$, $R^5$ and $R^6$ are identical or different and are each a cycloaliphatic radical of 5 or 6 carbon atoms or a straight-chain or branched aliphatic radical of 1 to 8 carbon atoms which may contain 1 or 2 hydroxyl groups or alkoxy groups of 1 to 6 carbon atoms, and Z is a straight-chain or branched divalent aliphatic radical of 2 to 12 carbon atoms, or of a secondary amine of the formula (VI)

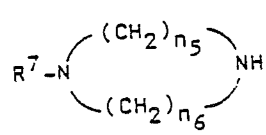

(VI)

where $n_5$ and $n_6$ are identical or different and are each 1, 2 or 3, and $R^7$ is an OH-substituted straight-chain or branched alkyl radical of 2 to 6 carbon atoms, and is thus converted to a polymeric Mannich base.

2. A process as claimed in claim 1, wherein 100 mol %, based on the epoxide groups present, of 4,4-bis-(4-hydroxyphenyl)-valeric acid is used as component a).

3. A process as claimed in claim 1, wherein 2,2-bis-(4-hydroxyphenyl)-propane is used as component a).

4. A process as claimed in any of claims 1 to 3, wherein di-n-butylamine is used as component $b_2\alpha$).

5. A process as claimed in any of claims 1 to 4, wherein N,N-dimethyl-N'-isobutylpropylene-1,3-diamine is used as component $b_2\beta$).

6. The use of a synthetic resin which has been prepared by a process as claimed in any of the preceding claims and has been rendered water-dilutable by partial or complete neutralization with an acid, as a binder for cathodic electrocoating finishes.

7. An aqueous surface coating bath for cathodic electrocoating, which contains from 5 to 30 % by weight of a synthetic resin which has been prepared by a process as claimed in claims 1 to 5 and has been rendered water-dilutable by partial or complete neutralization with an acid.

## Revendications

1. Procédé de préparation de résines synthétiques, autoréticulantes à la chaleur, à base de produits de polyaddition, d'un poids moléculaire moyen $\overline{M}_n$ de 750 à 5 000, qui contiennent, en moyenne, par molécule, au moins deux groupes OH phénoliques et qui sont diluables dans l'eau par addition d'acide caractérisé par le fait qu'on fait réagir au moins une résine époxyde aliphatique ou aromatique, ayant, en moyenne, au moins deux groupes époxyde par molécule et un poids équivalent d'époxyde de 87 à 2 000, avec

a) 55 à 125 % moles, rapporté aux groupes époxyde présents dans la résine époxyde, d'un composé qui, outre au moins un groupe OH phénolique, contient aussi un autre groupe fonctionnel, dont la réactivité vis-à-vis des groupes époxyde est égale ou supérieure à celle d'un groupe OH phénolique et qui possède la formule I

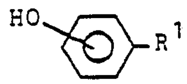

(I)

le groupe OH se trouvant en position méta ou para par rapport à $R^1$, $R^1$ représentant le reste

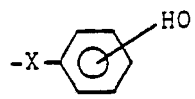

ou

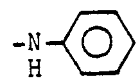

le groupe OH se trouvant en position méta ou para par rapport à X, X étant mis pour un reste aliphatique bivalent, à chaine droite ou ramifiée, et ayant 1 à 3 atomes de carbone, ou pour

$$-SO_2-,\ -SO-,\ -CO-,\ -O-,\ -\underset{H}{N}-,\ -(CH_2)_{n_1}-\underset{H}{N}-(CH_2)_{n_1}-,$$

$$-\underset{|}{C}H-(CH_2)_{n_2}-Y,\ CH_3-\overset{|}{\underset{|}{C}}-(CH_2)_{n_2}-Y$$

$n_1 = 1, 2$ ou 3, $n_2 = 0, 1, 2$ ou 3 et Y représentant un groupe carboxyle, un groupe mercapto ou un groupe amino secondaire, basique, contenant 1 à 4 atomes de carbone, un groupe amide d'acide substitué par alkyle sur N, ayant 3 à 6 atomes de carbone dans la chaîne alkyle, et dont la chaîne alkyle est interrompue par un groupe amino basique, secondaire et, éventuellement, est encore substituée par un groupe OH, ou une amidine cyclique de formule (II)

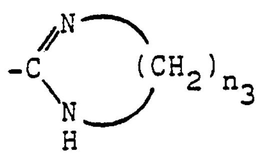

(II)

avec $n_3 = 2$ ou 3
jusqu'à ce que l'indice époxyde soit < 0,008, et on met en réaction le produit de polyaddition résultant, par mole de groupe OH phénolique, avec

$b_1$) 0,8 à 2,5 moles de formaldéhyde ou d'un composé fournissant du formaldéhyde et

$b_2$) 0,7 à 2 moles d'un mélange de

$\alpha$) 25 à 75 % (moles d'une amine secondaire de formule (III)

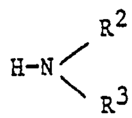

(III)

$R^2$ et $R^3$ étant identiques ou différents et mis pour un reste cycloaliphatique ayant 5 à 6 atomes de carbone ou un reste aliphatique à chaîne droite ou ramifiée ayant 1 à 8 atomes de carbone et qui contient éventuellement jusqu'à 2 groupes alcoxy ayant 1 à 6 atomes de carbone, ou d'une amine secondaire cyclique de formule (IV)

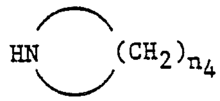 (IV)

$n_4$ = 4, 5 ou 6 et 1 ou 2 groupes $CH_2$ pouvant être remplacés par un atome d'oxygène et/ou un atome de soufre, ou d'une alkyléthanolamine ou alkylisopropanolamine ayant 1 à 6 atomes de carbone dans le reste alkyle, ou d'une dialkanolamine ayant 2 à 3 atomes de carbone dans le groupe alcanol ou d'un mélange d'amines secondaires de ce type, et

β) 25 à 75 % (moles) d'une amine secondaire de formule (V)

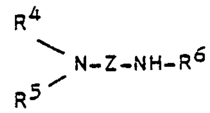 (V)

$R^4$, $R^5$ et $R^6$ étant identiques ou différents et représentant un reste cycloaliphatique ayant 5 à 6 atomes de carbone ou un reste aliphatique à chaîne droite ou ramifiée ayant 1 à 8 atomes de carbone, qui contient, éventuellement, jusqu'à 2 groupes hydroxy ou groupes alcoxy ayant 1 à 6 atomes de carbone, et Z représentant un reste aliphatique, bivalent, à chaîne droite ou ramifiée, ayant 2 à 12 atomes de carbone, ou d'une amine secondaire de formule (VI)

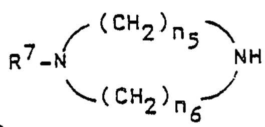 (VI)

$n_5$ et $n_6$ étant identiques ou différents et représentant 1, 2 ou 3 et $R^7$ représentant un reste alkyle à chaîne droite ou ramifiée, substitué sur OH et ayant 2 à 6 atomes de carbone,
et on le transforme ainsi en une base de Mannich polymère.

2. Procédé selon la revendication 1, caractérisé par le fait que l'on introduit comme composant a) de l'acide 4,4-bis-(4-hydroxyphényl)-valérianique, en quantité de 100 % (moles), rapportée aux groupes époxydes présents.

3. Procédé selon la revendication 1, caractérisé par le fait que l'on introduit comme composant a) du 2,2-bis-(4-hydroxyphényl)-propane.

4. Procédé selon l'une des revendications 1 à 3, caractérisé par le fait que l'on utilise, comme composant $b_2\alpha$) de la di-n-butylamine.

5. Procédé selon l'une des revendications 1 à 4, caractérisé par le fait que l'on utilise, comme composant $b_2\beta$) de la N,N-diméthyl-N'-isobutylpropylènediamine-1,3.

6. Utilisation des résines synthétiques, préparées par un procédé selon l'une des revendications précédentes et qui ont été rendues diluables dans l'eau par neutralisation, au moins partielle, avec un acide, comme liants pour peinture par électro-immersion déposable cathodiquement.

7. Bain de peinture aqueuse pour peinture par électro-immersion cathodique caractérisé par le fait qu'il contient 5 à 30 % en poids de la résine synthétique préparée par un procédé selon les revendications 1 à 5 et qui a été rendue diluable dans l'eau par neutralisation, au moins partielle, avec un acide.